# EUROPEAN PATENT SPECIFICATION

(11) **EP 0 621 143 B1**
(45) Date of publication and mention of the grant of the patent: **24.09.1997**
(21) Application number: 94302881.1
(22) Date of filing: 21.04.1994
(51) Int. Cl.: B60C 9/00, B60C 9/20

(54) **Pneumatic tyre**
Luftreifen
Bandage pneumatique

(30) Priority: 21.04.1993 JP 118956/93
(43) Date of publication of application: 26.10.1994
(73) Proprietor: Sumitomo Rubber Industries Ltd., Kobe-shi, Hyogo-ken (JP)
(72) Inventor: Komatsuki, Masato, Takasago-shi, Hyogo-ken (JP)
(74) Representative: Stewart, Charles Geoffrey

(56) References cited:
- EP-A- 0 293 263
- FR-A- 2 338 152
- FR-A- 2 476 548
- RESEARCH DISCLOSURE no. 159 , July 1977 , HAVANT GB pages 53 - 54 ANONYM 'reinforcing cords for elastomeric articles'

## Description

The present invention relates to a pneumatic tyre, the weight of which is reduced whilst the steering stability and low noise nature are maintained.

In order to reinforce the tread portion of a tyre, it has been proposed to use a belt made of aramid cords. However, if only an aramid cord belt is disposed in the tread portion, the tyre can not be provided with sufficient rigidity because the aramid cords are weak in compressive stress in contrast with their very high tensile modulus and lightweight nature. As a result, an aramid belt tyre is inferior in steering stability to a steel belt tyre.

Further, due to the decreased tread rigidity, deformation and vibration of the tyre are liable to occur during running, which result in increased tyre noise.

As a countermeasure for such decreased tread rigidity, it has been proposed to provide a steel cord belt together with an aramid cord belt. In such a case, however, the belt thickness is inevitably increased, and the tyre weight is increased.

"RESEARCH DISCLOSURE" No. 159, July 1977, pages 53-54, shows a way of reducing the tyre weight by means of a reinforcing layer made of hybrid cords of aramid and steel.

It is therefore, an object of the present invention to provide a pneumatic tyre, in which the tyre weight is reduced, with the tread rigidity being maintained.

According to the present invention, a pneumatic tyre comprises a pair of bead cores one disposed in each bead portion, a toroidal carcass extending between the bead portions and turned up around said pair of bead cores, and a belt disposed radially outside the carcass and inside a tread portion, the belt comprising two cross plies, each made of parallel hybrid cords of aramid and steel, each said hybrid cord comprising a core and an outer layer, each core consisting of first strands twisted together in a first direction, said outer layer consisting of second strands twisted around said core in a second direction which is reverse to the first direction, said first strands made of one of the two materials of aramid and steel, and said second strands made of the other material, the steel strand consisting of a steel monofilament, and the aramid strand consisting of aramid yarns twisted together in a third direction, each said aramid yarn consisting of aramid fibre filaments twisted together in a fourth direction which is reverse to the third direction.

Preferably, the total denier of all the aramid fibres in each hybrid cord is in the range of from 800 to 4000 deniers, and the diameter of the or each steel filament is in the range of from 0.17 to 0.38 mm.

As a result, when the hybrid cord is subjected to a compressive force, the force is shared with the steel strand, and the tread rigidity and cord strength in the direction of the compressive force are improved.

Embodiments of the present invention will now be described in detail in conjunction with the accompanying drawings in which:-
Fig.1 is a cross sectional view of a tyre according to the present invention;
Fig.2 is a partial perspective view of the belt ply of Fig. 1;
Fig.3 is a perspective view showing an example of the belt cord;
Fig.4 is a cross sectional view thereof; and
Figs.5 and 6 are cross sectional views each showing another example of the belt cord.

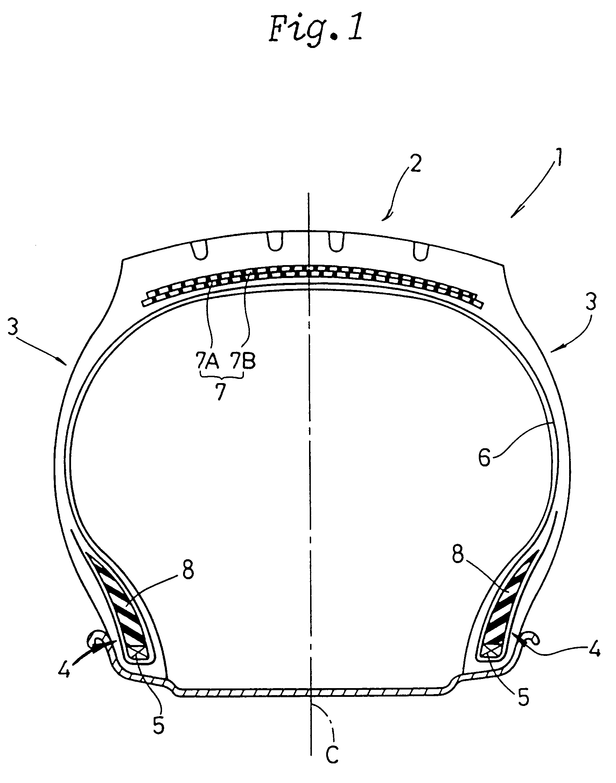

In Fig.1 to Fig.2, the pneumatic tyre 1 comprises a tread portion 2, a pair of axially spaced bead portions 4, a pair of sidewall portions 3 extending between tread edges and the bead portions 4, a pair of bead cores 5 disposed one in each bead portion 4, a carcass 6 extending between the bead portions 4, and a belt 7 disposed radially outside the carcass 6 and inside a rubber tread.

The carcass 6 comprises at least one radial or semiradial carcass ply of radially arranged cords extending between the bead portions 4 through the sidewall portions 3 and the tread portion 2 and being turned up around the bead cores 5 from the axially inside to the outside thereof to form two turned up portions and one main portion therebetween.

In this embodiment, the carcass 6 consists of a single ply of organic fibre cords, e.g. nylon, polyester, rayon, aramid or the like, arranged at an angle of 70 to 90 degrees with respect to the tyre equator C.

Between the carcass main portion and each turned up portion, a bead apex 8 is disposed. The bead apex 8 is made of hard rubber extending radially outwardly and tapering from the bead core 5.

The belt 7 comprises two crossed breaker plies 7A and 7B, of parallel cords 11 coated with topping rubber 12 although more than two such plies may be used.

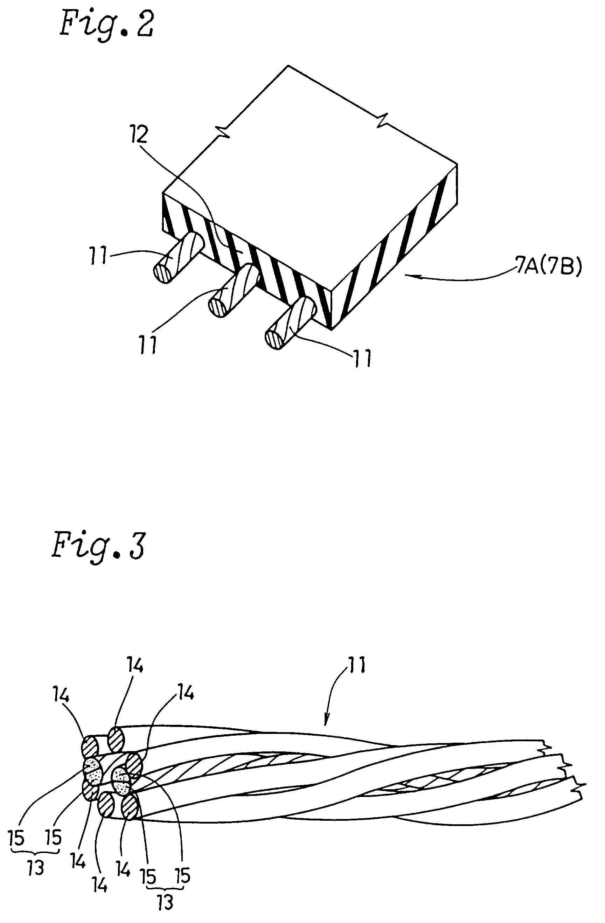

Each of the belt cords 11 is a hybrid cord composed of at least one aramid strand 13 and at least one steel strand 14. (See Fig. 3).

The or each steel strand 14 consists of a steel monofilament having a diameter in the range of from 0.17 to 0.35 mm.

The or each aramid strand 13 is composed of one or more yarns 15. The yarn is a bunch of aramid fibre filaments which are twisted together.

The total denier number of all the aramid fibre filaments in one cord is in the range of from 800 to 4000.

If the diameter of the steel filament 14 is less than 0.17 mm, the strength of the belt cord is too little and the tread rigidity is insufficient which deteriorates the steering stability. If the diameter is more than 0.35 mm, the diameter of the belt cord becomes large, and the tyre weight is increased to deteriorate the steering stability and ride comfort.

If the total denier number is less than 800, the belt rigidity is decreased and the steering stability is deteriorated. Further, tyre noise is liable to increase. If the total denier number is more than 4000, the diameter of the belt cord becomes large, and the resultant belt ply becomes too thick. As a result, the tyre weight is increased. Further, the tread rigidity is liable to be excessively increased which deteriorates the steering stability.

Further, when a plurality of steel strands 14 are used, the twisting pitch TWP thereof is preferably set in the range of 9.5 to 16 mm.

On the other hand, the twist number TWN for the aramid strand(s) 13 is preferably set in the range of 10 to 50 turn/10cm.

In this embodiment tyre, the cord 11 is composed of a plurality of aramid strands 13 and a plurality of steel strands 14.

In each belt ply, the count of the belt cords 11 is preferably in the range of from 30 to 40 ends/5cm.

On the other hand, organic fibres usually have retained moisture or humidity. As a result the steel filaments twisted with such organic fibres are liable to be rusted even when embedded in rubber. In order to prevent such rust, each aramid fibre filament is preferably resin-coated, for example, by first dipping the filament in epoxy resin and then in resorcinol-formaldehyde latex. Due to the resin coat, transfer of moisture or humidity from the aramid strand to the steel strand is hindered. In addition the rigidity of the aramid strand is increased to further improve the steering stability and reduce noise.

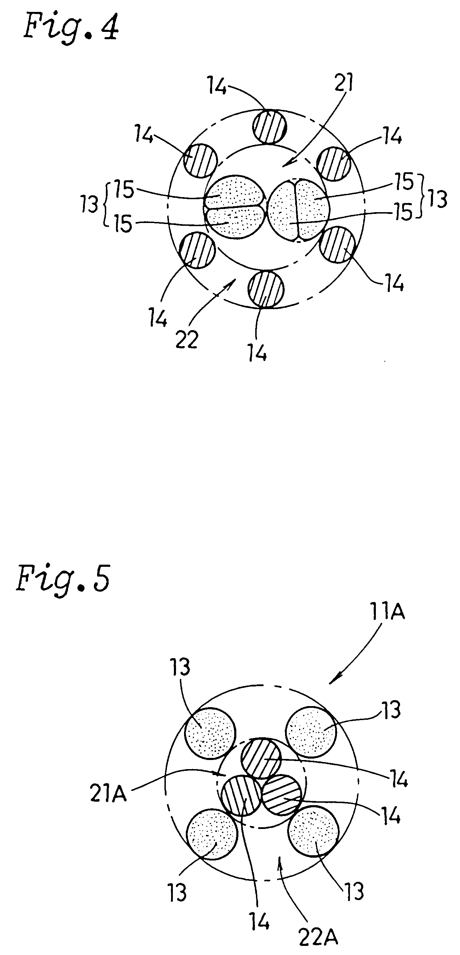

Figs.3 and 4 show an example of the belt cord 11. In this example, the belt cord 11 consists of a core 21 consisting of two aramid strands 13 twisted together and a outer layer 22 or "sheath" consisting of six steel strands 14 or filaments surrounding the core 21, whereby the cord has a so-called "2+6" construction. It should be noted that the number of aramid strands "m" may be more than two or the number of steel strands 14 may be more or less than six.

In this example cord, each of the aramid strands 13 consists of two yarns 15 twisted together.

The number of aramid fibre filaments in each yarn is in the range of from 150 to 250, and the total denier number in each strand is in the range of from 400 to 2000.

The aramid fibre filaments are firstly twisted in, for example, the Z-direction to form each yarn 15, and two yarns 15 are secondly twisted together in the reverse S-direction to form a strand 13. Finally two strands 13 are thirdly twisted in the Z-direction to form a core 21. Then the six steel strands 14 are fourthly twisted around the core 21 in the S-direction. The directions of the first to fourth twists can be reversed thereto.

As mentioned above, the number TWN of each of the first to third twists is in the range of 10 to 50 turn/10cm (in this example 35 turn/10 cm). The twisting pitch TWP for the steel strands 14 is in the range of 9.5 to 16 mm.

Fig.5 shows another example of the belt cord. In this example, the cord 11A consists of a core 21A consisting of three steel strands 14 and an outer layer 22A consisting of four aramid strands 13 surrounding the core 21A, whereby the cord 1A has a "3+4" construction.

In this example cord, each of the aramid strands 13 consists of a single yarn.

The steel strands 14 are firstly twisted in, for example, the Z-direction to form the core 21A. On the other hand, the aramid fibre filaments are secondly twisted in the Z-direction to form each strand 13, and then four aramid strands 13 are thirdly twisted around the core 21A in the S-direction.

The twisting pitch TWP of the first twist for the steel strands 14 is in the range of 9.5 to 16 mm. The number TWN of each of the second to third twists is in the range of 10 to 50 turn/10cm.

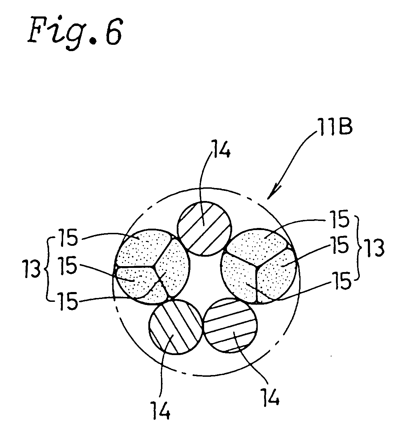

Fig.6 shows still another example of belt cord. In this example, the cord 11B consists of two aramid strands 13 and three steel strands 14, which are twisted together so as to provide a "1X5" construction.

In this example, each of the aramid strands 13 consists of three yarns 15 twisted together.

The aramid fibre filaments are firstly twisted in, for example, the Z-direction to form a yarn 15, and three such yarns 15 are secondly twisted in the reverse S-direction to form a strand 13. Then two aramid strands 13 and three steel strands 14 are thirdly twisted together in the Z-direction into a cord.

The number TWN of each of the first to second twists is in the range of 10 to 50 turn/10cm. The twisting pitch TWP of the third twist for the steel strands 14 and also the aramid strand 13 is in the range of 9.5 to 16 mm.
Test tyres of size 195/70R14 each having the same tyre construction as shown in Fig.1 were made and tested for the following performance factors. The cord specifications and the test results are shown in Table 1.

### 1) Steering stability and Ride comfort

By running a test car on a test course, the steering stability and ride comfort of the test tyres were evaluated into five ranks by a test driver, wherein the rank for the reference tyre 1 is three, and the larger the value, the better the performance.

### 2) Tyre noise

By running a test car at a running (coasting) speed of 60 km/h, the maximum noise sound level was measured according to the "Test Procedure for Tyre Noise" specified in JASO-C606. The results are indicated by an index based on the reference tyre 1 being set at 100. The larger the index, the better or smaller the tyre noise.

Throughout the tests, it was confirmed that in the Example tyres, especially Example tyre 2, that the tyre weight could be effectively reduced, whilst maintaining the other performance factors at good levels.

**TABLE 1**

| Tyre | Ex.1 | Ex.2 | Ex.3 | Ex.4 | Ex.5 |
|---|---|---|---|---|---|
| Cord construction | 2+6 | 2+4 | 2+2 | 2+6 | 2+2 |
| Core *1 | A | A | A | A | A |
| Outer layer *1 | S | S | S | S | S |
| Aramid strand denier/no. | 1000/2 | 1000/2 | 1000/2 | 1000/2 | 1000/2 |
| Total denier | 2000 | 2000 | 2000 | 2000 | 2000 |
| Steel strand dia.(mm)/no. | 0.175/6 | 0.22/4 | 0.32/2 | 0.15/6 | 0.38/2 |
| Cord strength (N) | 600 | 620 | 650 | 540 | 700 |
| Cord count (ends/5cm) | 35 | 35 | 35 | 35 | 35 |

| Test result | | | | | |
|---|---|---|---|---|---|
| Tyre weight (kg) | 8.2 | 8.3 | 8.6 | 8.1 | 8.6 |
| Steering stability | 2.9 | 3.0 | 3.1 | 2.7 | 2.8 |
| Ride comfort | 3.2 | 3.1 | 2.9 | 3.2 | 2.7 |
| Tyre noise | 96 | 100 | 102 | 94 | 105 |
| | | | | | |

| Tyre | Ex.6 | Ex.7 | Ex.8 | Ref.1 | Ref.2 |
|---|---|---|---|---|---|
| Cord construction | 2+4 | 3+4 | 1+2 | 1X5 | (1X2) |
| Core *1 | A | A | S | - | - |
| Outer layer *1 | S | S | A | - | - |
| Aramid strand denier/no. | 380/2 | 1500/3 | 1000/2 | - | 1500/2 |
| Total denier | 760 | 4500 | 2000 | | 3000 |
| Steel strand dia.(mm)/no. | 0.22/4 | 0.22/4 | 0.25/1 | 0.25/5 | - |
| Cord strength (N) | 560 | 670 | 510 | 640 | 500 |
| Cord count (ends/5cm) | 35 | 35 | 50 | 35 | 55 |

| Test result | | | | | |
|---|---|---|---|---|---|
| Tyre weight (kg) | 8.2 | 8.6 | 7.9 | 8.7 | 7.7 |
| Steering stability | 2.7 | 3.0 | 2.7 | 3.0 | 2.6 |
| Ride comfort | 3.1 | 2.9 | 3.0 | 3.0 | 3.1 |
| Tyre noise | 97 | 104 | 93 | 100 | 90 |

| | | | | | |
|---|---|---|---|---|---|
| *1) A = Aramid, S = Steel | | | | | |

## Claims

1. A pneumatic tyre comprising a pair of bead cores (5) one disposed in each bead portion (4), a toroidal carcass (6) extending between the bead portions (4) and turned up around said pair of bead cores (5), and a belt (7) disposed radially outside the carcass (6) and inside a tread portion (2), the belt comprising two cross plies (7A,7B), each made of parallel hybrid cords (11) of aramid and steel, each said hybrid cord (11) comprising a core (21,21A) and an outer layer (22,22A), each core (21,21A) consisting of first strands (13,14) twisted together in a first direction, said outer layer (22,22A) consisting of second strands (13,14) twisted around said core (21,21A) in a second direction which is reverse to the first direction, said first strands (13,14) made of one of the two materials of aramid and steel, and said second strands (13,14) made of the other material, the steel strand (14) consisting of a steel monofilament, and the aramid strand (13) consisting of aramid yarns (15) twisted together in a third direction, each said aramid yarn (15) consisting of aramid fibre filaments twisted together in a fourth direction which is reverse to the third direction.

2. A pneumatic tyre according to claim 1, characterised in that said cord (21) consists of the aramid strands (13) twisted in the first direction, each said aramid strand (13) consisting of aramid yarns (15) twisted in the second direction, each said aramid yarn (15) consisting of aramid fibre filaments twisted in the first direction, and said outer layer (22) consists of the steel strands (14) twisted around said core (21) in the second direction.

3. A pneumatic tyre according to claim 1, characterised in that said core (21A) consists of the steel strands (14) twisted in the first direction, and said outer layer (22A) consists of the aramid strands (13) twisted around the core (21A) in the second direction, each said aramid strand (13) consisting of aramid fibre filaments twisted in the first direction.

4. A pneumatic tyre according to any of claims 1 to 3, characterised in that the total denier number of all the aramid fibre filaments in each cord (11) is in the range of from 800 to 4000 deniers.

5. A pneumatic tyre according to any of claims 1 to 4, characterised in that the diameter of the steel monofilament is in the range of from 0.17 to 0.38 mm.

6. A pneumatic tyre according to any one of claims 1 to 5, characterised in that the aramid fibre filaments are coated with a waterproofing resin.

7. A pneumatic tyre according to any one of claims 1 to 6, characterised in that said plurality of steel strands (14) have a twist pitch in the range of 9.5 to 16 mm, and said plurality of aramid strands (13) have a twist number in the range of 10 to 50 turn/10cm.

## Patentansprüche

1. Pneumatischer Reifen umfassend ein Paar Wulstkerne (5), wobei einer in jedem Wulstabschnitt (4) angeordnet ist, eine torodiale Karkasse (6), die sich zwischen den Wulstabschnitten (4) erstreckt und um das Paar Wulstkerne (5) herum umgeschlagen ist, und einen Gürtel (7), der radial außerhalb der Karkasse (6) und innerhalb eines Laufflächenabschnitts (2) angeordnet ist, wobei der Gürtel zwei Kreuzlagen (7A, 7B) umfaßt, jede aus parallelen Hybridcorden (11) aus Aramid und Stahl hergestellt ist, jeder Hybridcord (11) einen Kern (21, 21A) und eine äußere Schicht (22, 22A) umfaßt, jeder Kern (21, 21A) aus ersten Strängen (13, 14) besteht, die in einer ersten Richtung zusammen verdreht sind, die äußere Schicht (22, 22A) aus zweiten Strängen (13, 14) besteht, die um den Kern (21, 21A) herum in einer zweiten Richtung verdreht sind, die zu der ersten Richtung umgekehrt ist, die ersten Stränge (13, 14) aus einem der zwei Materialien von Aramid und Stahl hergestellt sind, und die zweiten Stränge (13, 14) aus dem anderen Material hergestellt sind, der Stahlstrang (14) aus einem Stahlmonofilament besteht, und der Aramidstrang (13) aus Aramidgarnen (15) besteht, die in einer dritten Richtung zusammen verdreht sind, jeder Aramidgarn (15) aus Aramidfaserfilamenten besteht, die in einer vierten Richtung zusammen verdreht sind, die zu der dritten Richtung umgekehrt ist.

2. Pneumatischer Reifen nach Anspruch 1,
dadurch **gekennzeichnet,**
daß der Cord (21) aus den Aramidsträngen (13) besteht, die in der ersten Richtung verdreht sind, jeder Aramidstrang (13) aus Aramidgarnen (15) besteht, die in der zweiten Richtung verdreht sind, jeder Aramidgarn (15) aus Aramidfaserfilamenten besteht, die in der ersten Richtung verdreht sind, und die äußere Schicht (22) aus den Stahlsträngen (14) besteht, die um den Kern (21) herum in der zweiten Richtung verdreht sind.

3. Pneumatischer Reifen nach Anspruch 1,
dadurch **gekennzeichnet,**
daß der Kern (21A) aus den Stahlsträngen (14) besteht, die in der ersten Richtung verdreht sind, und die äußere Schicht (22A) aus den Aramidsträngen (13) besteht, die um den Kern (21A) herum in der zweiten Richtung verdreht sind, wobei jeder Aramidstrang (13) aus Aramidfaserfilamenten besteht, die in der ersten Richtung verdreht sind.

4. Pneumatischer Reifen nach irgendeinem der Ansprüche 1 bis 3,
dadurch **gekennzeichnet,**
daß die Gesamtdenieranzahl von allen der Aramidfaserfilamente in jedem Cord (11) in dem Bereich von 800 bis 4000 Denier liegt.

5. Pneumatischer Reifen nach irgendeinem der Ansprüche 1 bis 4,
dadurch **gekennzeichnet,**
daß der Durchmesser des Stahlmonofilaments in dem Bereich von 0,17 bis 0,38 mm liegt.

6. Pneumatischer Reifen nach irgendeinem der Ansprüche 1 bis 5,
dadurch **gekennzeichnet,**
daß die Aramidfaserfilamente mit einem wasserdichtmachenden Harz überzogen sind.

7. Pneumatischer Reifen nach irgendeinem der Ansprüche 1 bis 6,
dadurch **gekennzeichnet,**
daß die Vielzahl von Stahlsträngen (14) eine Verdrehungsteilung in dem Bereich von 9,5 bis 16 mm aufweist, und die Vielzahl von Aramidsträngen (13) eine Verdrehungsanzahl in dem Bereich von 10 bis 50 Windungen/10cm aufweist.

## Revendications

1. Pneumatique comprenant une paire de tringles (5) disposées chacune dans une partie de talon (4), une carcasse toroïdale (6) disposée entre les parties de talon (4) et repliée autour de la paire de tringles (5), et une ceinture (7) placée radialement à l'extérieur de la carcasse (6) et à l'intérieur d'une partie de bande de roulement (2), la ceinture comprenant deux nappes croisées (7A, 7B), formées chacune de câblés hybrides parallèles (11) d'aramide et d'acier, chaque câblé hybride (11) comprenant une âme (21, 21A) et une couche externe (22, 22A), chaque âme (21, 21A) étant constituée de premiers brins (13, 14) qui sont retordus dans un premier sens, la couche externe (22, 22A) étant constituée de seconds brins (13, 14) qui sont retordus autour de l'âme (21, 21A) dans un second sens inverse du premier, les premiers brins (13, 14) étant formés de l'un des deux matériaux aramide et acier, et les seconds brins (13, 14) étant formés de l'autre de ces matériaux, le brin d'acier (14) étant constitué d'un monofilament d'acier, et le brin d'aramide (13) étant constitué de fils d'aramide (15), retordus dans un troisième sens, chacun des fils d'aramide (15) étant constitué de filaments de fibres d'aramide retordus dans un quatrième sens qui est inverse du troisième sens.

2. Pneumatique selon la revendication 1, caractérisé en ce que le câblé (21) est constitué de brins d'aramide (13) retordus dans le premier sens, chacun des brins d'aramide (13) étant constitué de fils d'aramide (15) retordus dans le second sens, chaque fil d'aramide (15) étant constitué de filaments de fibres d'aramide retordus dans le premier sens, et la couche externe (22) est constituée de brins d'acier (14) retordus autour de l'âme (21) dans le second sens.

3. Pneumatique selon la revendication 1, caractérisé en ce que l'âme (21A) est constituée de brins d'acier (14) retordus dans le premier sens, et la couche externe (22A) est constituée de brins d'aramide (13) retordus autour de l'âme (21A) dans le second sens, chacun des brins d'aramide (13) étant constitué de filaments de fibres d'aramide retordus dans le premier sens.

4. Pneumatique selon l'une quelconque des revendications 1 à 3, caractérisé en ce que le nombre total de deniers de tous les filaments de fibres d'aramide de chaque câblé (11) est compris entre 800 et 4 000.

5. Pneumatique selon l'une quelconque des revendications 1 à 4, caractérisé en ce que le diamètre du mono-filament d'acier est compris entre 0,17 et 0,38 mm.

6. Pneumatique selon l'une quelconque des revendications 1 à 5, caractérisé en ce que les filaments de fibres d'aramide sont revêtus d'une résine d'imperméabilisation.

7. Pneumatique selon l'une quelconque des revendications 1 à 6, caractérisé en ce que les brins d'acier (14) ont un pas de torsion compris entre 9,5 et 16 mm, et les brins d'aramide (13) ont un nombre de torsions compris entre 10 et 50 tours par fraction de 10 cm.
